Europäisches Patentamt

European Patent Office

Office européen des brevets

(19)

(11) Publication number: **0 096 867**
**A2**

(12) **EUROPEAN PATENT APPLICATION**

(21) Application number: 83105714.6

(22) Date of filing: 10.06.83

(51) Int. Cl.³: **H 02 J 7/14**
**// H02J7/24**

(30) Priority: 11.06.82 JP 101014/82
11.06.82 JP 101015/82
19.06.82 JP 106413/82
19.06.82 JP 106409/82
19.06.82 JP 106411/82

(43) Date of publication of application: 28.12.83
Bulletin 83/52

(84) Designated Contracting States: DE FR GB

(71) Applicant: **MITSUBISHI DENKI KABUSHIKI KAISHA, 2-3, Marunouchi 2-chome Chiyoda-ku, Tokyo 100 (JP)**

(72) Inventor: **Mitsuharu, Morishita Mitsubishi Denki K.K., Himeji Works No. 840, Chiyoda-cho, Himeji-shi Hyogo (JP)**
Inventor: **Kouge, Shinichi Mitsubishi Denki K.K., Himeji Works No. 840 Chiyoda-cho, Himeji-shi Hyogo (JP)**

(74) Representative: **Lehn, Werner, Dipl.-Ing. et al, Hoffmann, Eitle & Partner Patentanwälte Arabellastrasse 4 (Sternhaus), D-8000 München 81 (DE)**

(54) **Battery charging system control device.**

(57) A charging system for charging a battery (4) for vehicular use is provided with a microcomputer control system (8) which reads voltage or current levels at a plurality of points of the charging system periodically, along with one or more outputs from sensors (e.g. 7), and processes these inputs to derive an appropriate system control voltage for controlling a regulator (3).

EP 0 096 867 A2

- 1 -

# BATTERY CHARGING SYSTEM CONTROL DEVICE

This invention relates to a control device for a charging system, and to internal combustion engines and vehicles including such a system.

A conventional charging system comprises a battery, a generator and a voltage regulator for controlling the output of the generator installed on a vehicle. The output of the generator provided through the rectifier is detected by the voltage regulator and the field current of the generator is controlled so that the output of the generator is held at a predetermined value (about 14.5 V at 20°C). The characteristics of the voltage regulator and the battery change with the ambient temperature. Accordingly, the voltage regulator may have a temperature compensation function so as to compensate for the variations of the characteristic according to a temperature characteristic curve having a temperature inclination of -10 mV/°C.

However, the voltage regulator and the battery are not maintained under the same thermal conditions. For instance, they are different from each other in heat generation, thermal capacity, heat radiation and cooling capacity, and in ambient temperature if they are mounted at different positions. Furthermore, the internal resistance of the battery may change greatly (approximately

0096867

- 2 -

doubling) with the passing of time. Accordingly, it is difficult to maintain the charging system in a suitable state using the preset temperature compensation function of the voltage regulator.

Furthermore, the generator is driven by the internal combustion engine, and therefore in the case where the above, described predetermined value is controlled at the time of acceleration or deceleration of the engine, so that the mechanical load of the engine, i.e., the generator drive output, is controlled, it is difficult to externally do so.

An object of this invention is to eliminate or at least reduce the above-described difficulties accompanying a charging system. More specifically, an object of the invention is to provide a charging system control device in which data representative of the states of various parts of the charging system of an internal combustion engine are loaded with a certain sampling period of time, 1 second, for instance, and present values and variations with time of these data are utilized to control the charging system so as to be in a suitable state.

These objects may be achieved by a charging system embodying the present invention.

According to the invention, there is provided a control device for controlling a charging system of an internal combustion engine characterised by: at least one sensor for detecting an operational parameter; and a charging system controlling microcomputer for reading plural signals representative of electrical states of said charging system and output signals from said sensor at a predetermined sampling rate and processing said signals to generate an output for controlling said charging system so as to be in the most suitable state.

For a better understanding of the invention, and to show how the same may be carried into effect, reference will now be made, by way of example, to the accompanying drawings, in which:

Figure 1 is a circuit diagram illustrating a control device according to a first embodiment of this invention;

Figures 2-4 are circuit diagrams illustrating modifications of the first embodiment of Figure 1;

Figure 5 is a flow diagram illustrating the control functions of the microcomputer; and

Figures 5A-5I are flow diagrams individually indicating details of each of the control blocks of Figure 5.

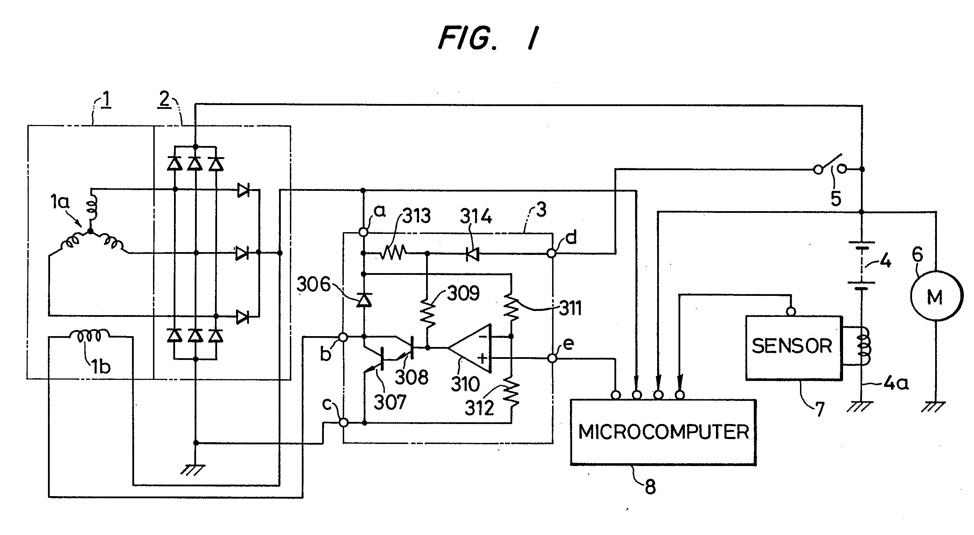

A first example of a charging system control device according to the present invention will now be described with reference to Figure 1. A generator 1 has an armature 1a and a field coil 1b. A full-wave rectifier 2 comprises a plurality of diodes for subjecting the output of the generator, i.e., the three-phase AC output of the armature 1a to full-wave rectification; and a voltage regulator 3 comprises diodes 306 and 314, transistors 307 and 308, resistors 311, 312 and 313 and a comparator 310 and has a voltage detecting terminal $\underline{a}$, a terminal $\underline{b}$ connected to the field coil 1b and for a controlled field current, a ground terminal $\underline{c}$, a terminal $\underline{d}$ for supplying a current adapted to initially excite the generator 1, and a terminal e to which a control voltage is applied. Figure 1 further shows an ordinary battery 4, a key switch 5 which is closed to start the internal combustion engine (not shown); and a starter 6 for starting the internal combustion engine. The generator 1, the rectifier 2, the voltage regulator 3 and the battery 4 form a charging system to which the technical concept of the invention is applied.

Furthermore, Figure 1 shows a sensor 7 for detecting a condition or conditions of the charging system, i.e., a sensor for detecting the current flowing in a wire 4a connected between the negative terminal of the battery 4 and ground; and a charging system-controlling microcomputer 8 for storing the voltage at the terminal a of the voltage regulator 3, the voltage of the battery 4 and the output of the sensor 7, in order to apply a reference voltage which is determined through processing, as required, to the terminal e of the voltage regulator 3. The microcomputer 8 has an analog-to-digital converter, a digital-to-analog converter, and a memory which has stored therein a program and the data required for suitably controlling the charging system.

The operation of the control device thus organized will now be described. The control section 8 stores the voltage at the terminal a of the voltage regulator 3, the voltage of the battery 4 and the output signal of the sensor 7 as data representative of the state of the charging system with a sampling frequency of about 1 hertz, for instance. As is well known, these voltages have inherent values, about 12.6 V for instance, when the key switch 5 is turned off, and the terminal voltage of the battery 4 shows inherent variation as the battery 4 is charged again after the internal combustion engine has been started.  Accordingly, in charging the battery 4, the microcomputer 8 calculates a most suitable control voltage from the voltage at the positive terminal of the battery 4 and the output signal of the sensor 7 so that the battery 4 is charged by a charging current in a predetermined range of about 1 to 10A and applies the control voltage thus calculated to the terminal $e$ of the voltage regulator 3.  When it is detected that the voltage at the positive terminal of the battery 4 has been saturated, that is, when the terminal voltage V of the battery is approximately equal to the output voltage of the generator 1, it is determined that the battery 4 has been fully charged, and the control voltage applied to the terminal $e$ is decreased.  As a result, the voltage regulator 3 interrupts the current of the field coil 1d, to decrease the output voltage of the generator 1, thereby to stop charging the battery 4.  In addition, at the start, the microcomputer 8 calculates the internal resistance of the battery 4 from the drop of the terminal voltage of the battery 4 and the discharge current, and stores the internal resistance thus calculated as a control parameter, the internal resistance value being suitably renewed later.  Furthermore, at the start, in order to reduce the load of the starter 6 as much as possible, the microcomputer 8 operates to decrease the control voltage applied to the terminal $e$ of the voltage regulator, to thereby suppress the operation of the generator 1.

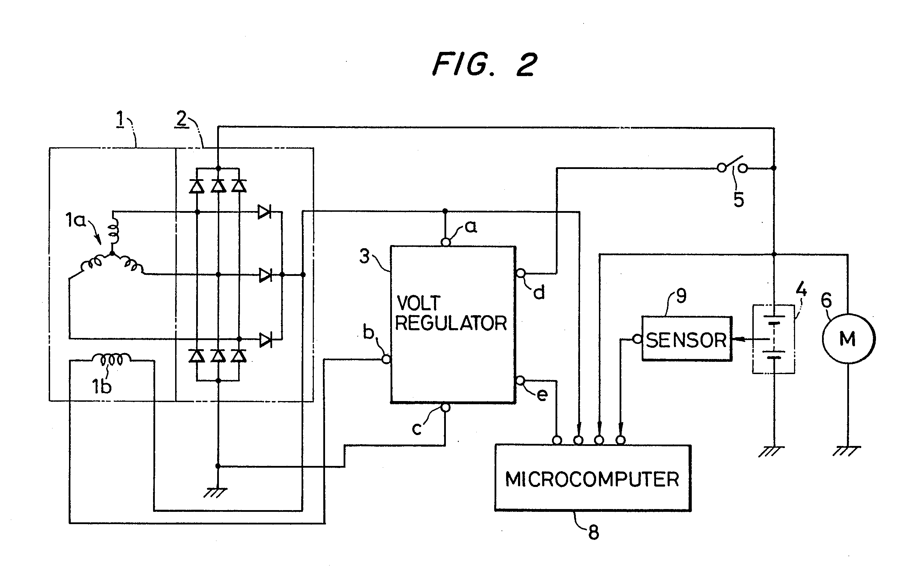

In the above-described embodiment of the charging system control device, the data at three points of the charging system, namely, the voltage at the terminal $a$ of the voltage regulator 3, the voltage of the battery 4 and the charge or discharge current are written into the microcomputer memory.  This first embodiment may be modified so that, as in a second embodiment of the control device according to the invention shown in Figure 2, instead of the charge or discharge current, data representing the specific gravity of electrolyte in the battery 4 is written into the microcomputer memory from a specific gravity sensor 9 so as to be employed as data for most suitably controlling the charging system. The specific gravity of the electrolyte is about 1.26 when the battery has been fully charged.

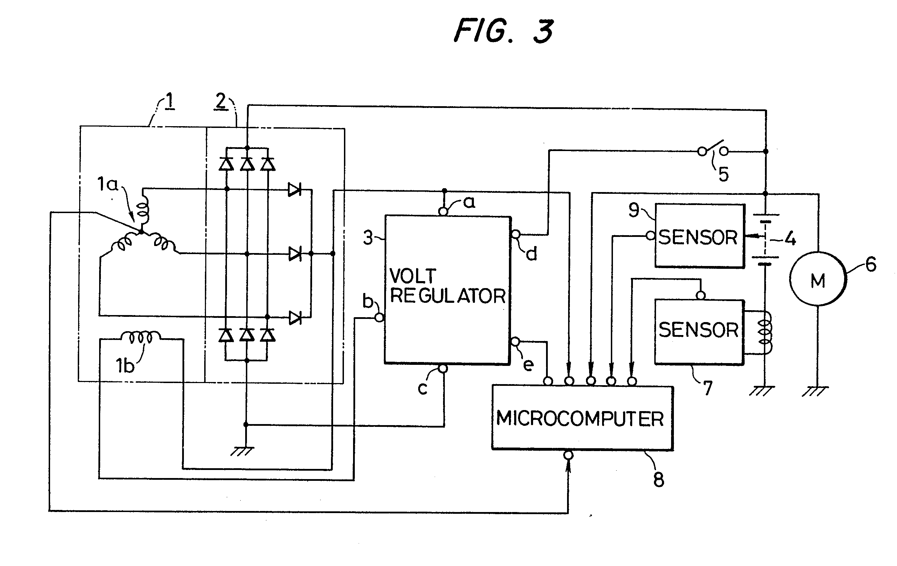

In addition, the voltage at the neutral point of the generator, the temperatures at various points of the charging system and the acidity and other electrochemical characteristics of the battery 4 may be employed as the data representative of the states of the charging system. Accordingly, although data at three points of the charging system are inputted in the first and second embodiments of the control device in Figures 1 and 2, the invention is not limited thereto or thereby. In a third embodiment of the control device according to the invention shown in Figure 3, various combinations of the above-described data are inputted into the microcomputer memory.

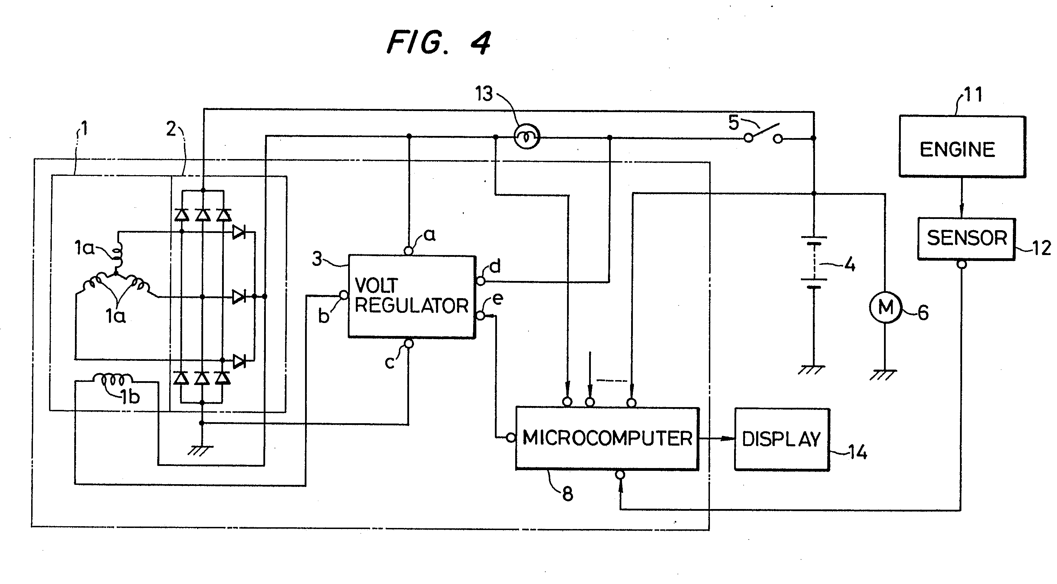

Figure 4 shows a fourth embodiment of the charging system control device according to the invention. In the fourth embodiment, a sensor 12 for detecting engine data of the internal combustion engine 11 is provided. Since the engine data are inputted into the memory of microcomputer 8, a variation in the state of the charging system due to a problem such as breakage of the power transmission belt coupled to the generator, which occurs in other than the charging system, can be detected. Accordingly, the charging system can be more effectively controlled. The engine data may for instance comprise engine R.P.M., the temperature of the cooling water, brake conditions and acceleration data.

In Figure 4, a charging pilot lamp 13 is illustrated which is turned on by an initial exciting current when the key switch 5 is closed to start the engine. The lamp 13 is installed on the instrument panel of the vehicle, or the like. The pilot lamp 13 is maintained turned off while the generator generates electricity, because the potential difference across the pilot lamp is substantially zero (for instance less than 0.6 V).

Furthermore, when processing is carried out on the above-described data from various points, problems or faults in the charging system such as when the battery is excessively charged or discharged, the generator does not work, control is not effected, wires are broken, and so forth can be detected. The results of such detection may be indicated to the operator by means of an indicator 14 such as an acoustic device, liquid crystal display unit or cathode ray tube.

It is preferable that the charging system controlling microcomputer in Figures 1 to 4 be built into the AC generator or installed on the latter so that the charging system control device can be made compact.

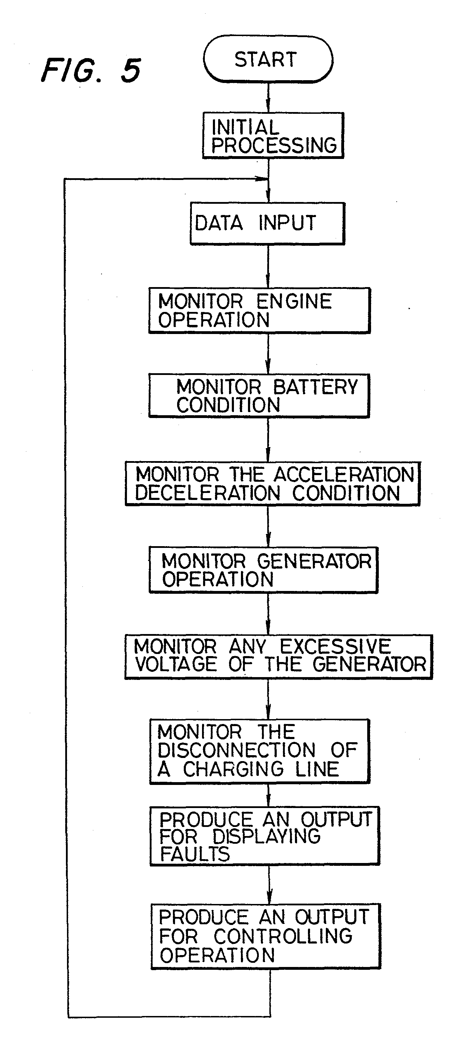

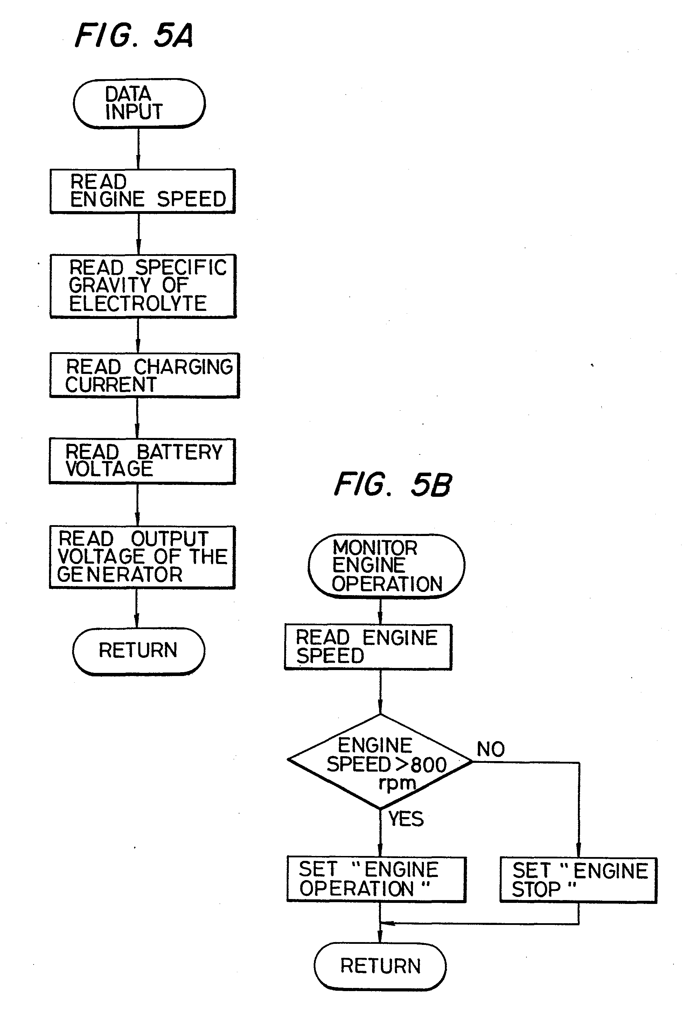

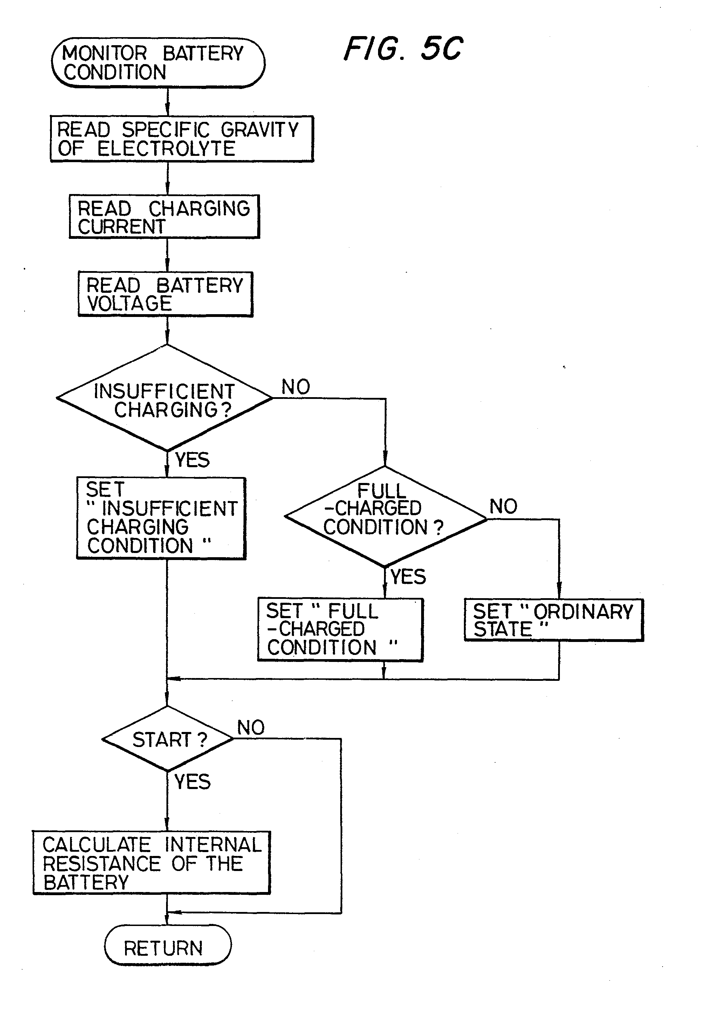

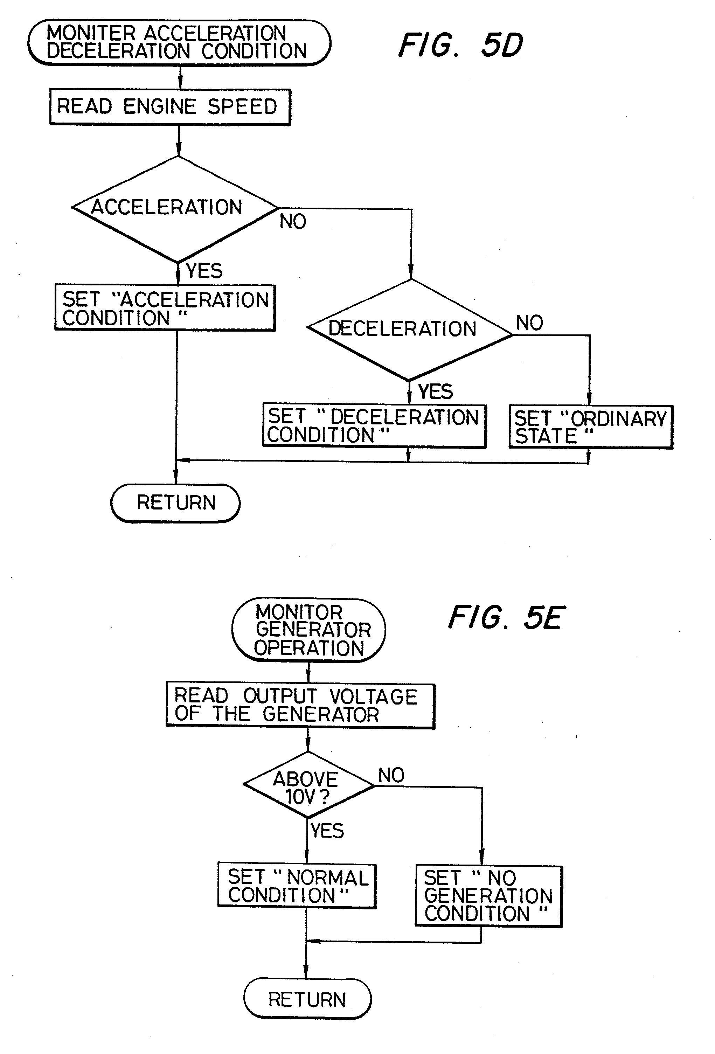

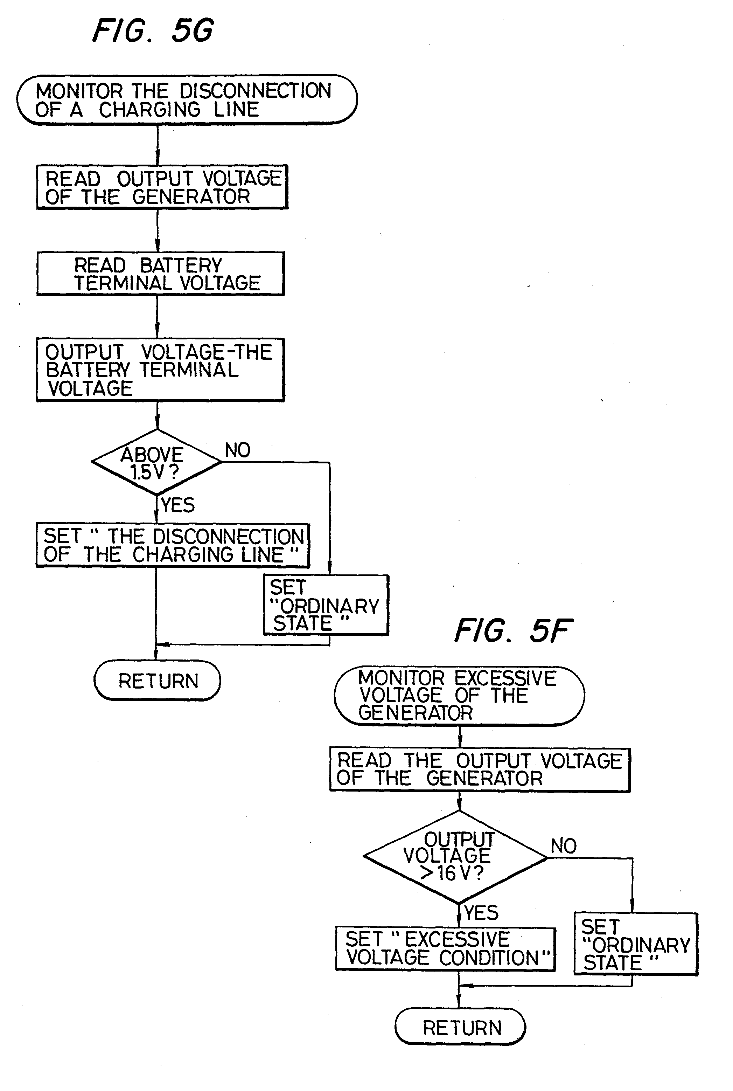

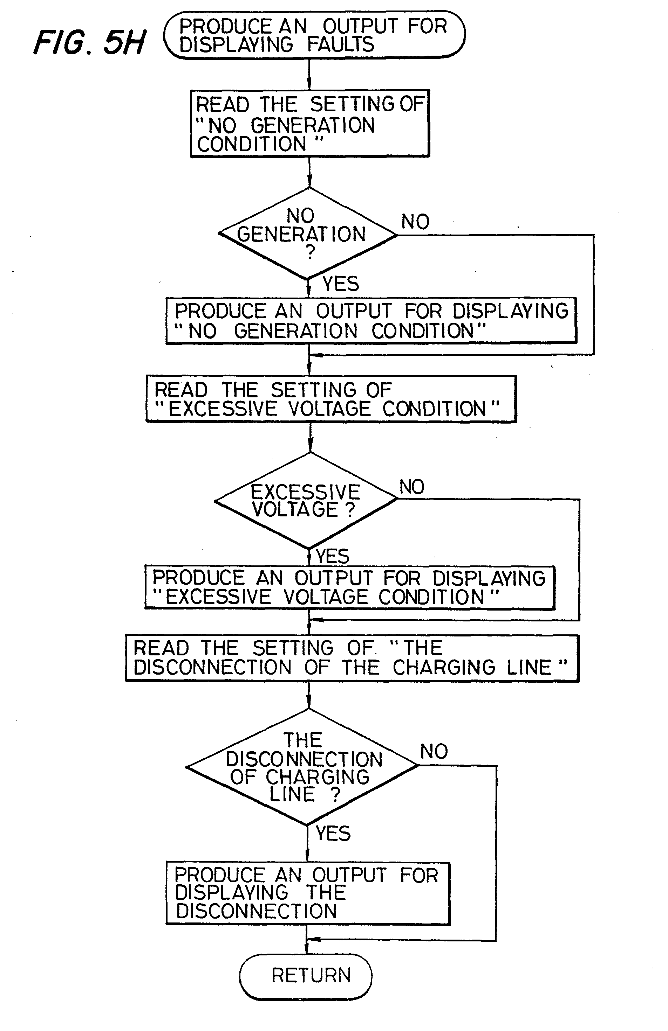

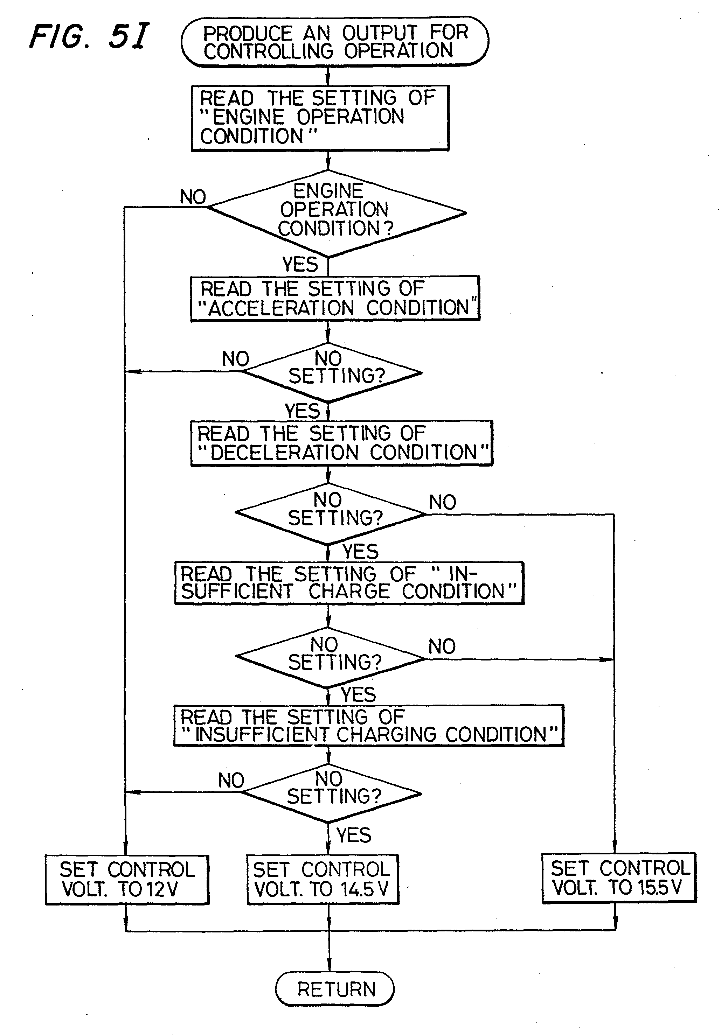

Figure 5 is a flow chart showing an example of a control program for controlling the charging system to the most preferable condition. Figures 5A to 5I are also flow charts showing the control operations of the respective blocks in Figure 5 in greater detail.

As is apparent from the above description, the condition of the charging system is monitored, diagnosed and displayed by periodically inputting the data at a plurality of points of the charging system into the microcomputer. Accordingly, the output of the generator can be set to the most suitable value, and even when the temperature of the battery is changed or the characteristic of the battery is changed with time, the charging system can be suitably controlled. Furthermore, with the charging system control device of the invention, the mechanical load can be readily controlled at the start, or at the time of acceleration or deceleration.

Claims:

1. A control device for controlling a charging system of an internal combustion engine characterised by: at least one sensor (7,9,12) for detecting an operational parameter; and a charging system controlling microcomputer (8) for reading plural signals representative of electrical states of said charging system and output signals from said sensor (7,9,12) at a predetermined sampling rate and processing said signals to generate an output for controlling said charging system so as to be in the most suitable state.

2. A device as claimed in claim 1 characterised in that said at least one sensor comprises a battery current detector (7).

3. A device as claimed in claim 1 or 2 characterised in that said at least one sensor comprises a battery electrolyte specific gravity sensor (9).

4. A device as claimed in any one of claims 1 to 3 characterised in that said at least one sensor comprises an engine data detecting sensor (12).

5. A charging system for an internal combustion engine (11) characterised by a generator (1) for drive by an engine; a rectifier (2) for rectifying an output of said generator (1); a voltage regulator (3) for setting the output to a predetermined value according to a reference value; connections for a battery to be charged by the output of said rectifier; and by a control device according to any one of the preceding claims.

6. A system as claimed in claim 5 characterised in that said voltage regulator (3) includes an input terminal (e) for receiving a microcomputer output signal comprising a reference voltage setting signal.

7. An internal combustion engine characterised by a charging system according to claim 5 or 6.

8. A vehicle characterised by an internal combustion engine according to claim 7.

# FIG. 1

FIG. 2

## FIG. 3

FIG. 4

0096867

**FIG. 5**

START

INITIAL PROCESSING

DATA INPUT

MONITOR ENGINE OPERATION

MONITOR BATTERY CONDITION

MONITOR THE ACCELERATION DECELERATION CONDITION

MONITOR GENERATOR OPERATION

MONITOR ANY EXCESSIVE VOLTAGE OF THE GENERATOR

MONITOR THE DISCONNECTION OF A CHARGING LINE

PRODUCE AN OUTPUT FOR DISPLAYING FAULTS

PRODUCE AN OUTPUT FOR CONTROLLING OPERATION

## FIG. 5A

```
    ┌─────────────┐
    │    DATA     │
    │   INPUT     │
    └─────────────┘
           │
           ▼
    ┌─────────────┐
    │   READ      │
    │ ENGINE SPEED│
    └─────────────┘
           │
           ▼
    ┌─────────────┐
    │READ SPECIFIC│
    │ GRAVITY OF  │
    │ ELECTROLYTE │
    └─────────────┘
           │
           ▼
    ┌─────────────┐
    │READ CHARGING│
    │  CURRENT    │
    └─────────────┘
           │
           ▼
    ┌─────────────┐
    │READ BATTERY │
    │  VOLTAGE    │
    └─────────────┘
           │
           ▼
    ┌─────────────┐
    │READ OUTPUT  │
    │VOLTAGE OF THE│
    │ GENERATOR   │
    └─────────────┘
           │
           ▼
    ┌─────────────┐
    │   RETURN    │
    └─────────────┘
```

## FIG. 5B

```
    ┌─────────────┐
    │  MONITOR    │
    │  ENGINE     │
    │ OPERATION   │
    └─────────────┘
           │
           ▼
    ┌─────────────┐
    │READ ENGINE  │
    │  SPEED      │
    └─────────────┘
           │
           ▼
         ◇◇◇◇◇
       ◇ ENGINE ◇   NO
      ◇ SPEED>800 ◇──────┐
       ◇  rpm   ◇        │
         ◇◇◇◇◇           │
           │ YES         │
           ▼             ▼
    ┌─────────────┐ ┌─────────────┐
    │SET "ENGINE  │ │SET "ENGINE  │
    │OPERATION"   │ │STOP"        │
    └─────────────┘ └─────────────┘
           │             │
           ◄─────────────┘
           ▼
    ┌─────────────┐
    │   RETURN    │
    └─────────────┘
```

0096867

## FIG. 5C

```
( MONITOR BATTERY
  CONDITION )
        |
        v
[ READ SPECIFIC GRAVITY
  OF ELECTROLYTE ]
        |
        v
[ READ CHARGING
  CURRENT ]
        |
        v
[ READ BATTERY
  VOLTAGE ]
        |
        v
< INSUFFICIENT          NO
  CHARGING? >----------------+
        |                     |
       YES                    v
        |            < FULL              NO
        v              -CHARGED    ----------+
[ SET                  CONDITION ? >         |
  " INSUFFICIENT           |                 |
  CHARGING               YES                 |
  CONDITION " ]           |                  |
        |                 v                  v
        |         [ SET " FULL      [ SET "ORDINARY
        |           -CHARGED          STATE " ]
        |           CONDITION " ]       |
        |                 |             |
        +-----------------+-------------+
        |
        v
< START ?   NO
  >-----------+
        |     |
       YES    |
        |     |
        v     |
[ CALCULATE INTERNAL
  RESISTANCE OF THE
  BATTERY ]     |
        |       |
        +<------+
        |
        v
  ( RETURN )
```

8/11

0096867

## FIG. 5D

```
( MONITER ACCELERATION
  DECELERATION CONDITION )
            │
            ▼
  ┌──────────────────────┐
  │  READ ENGINE SPEED   │
  └──────────────────────┘
            │
            ▼
       ◇ ACCELERATION ◇ ──NO──────────────┐
            │ YES                          ▼
            │                        ◇ DECELERATION ◇ ──NO──┐
  ┌──────────────────────┐               │ YES              ▼
  │ SET "ACCELERATION    │   ┌────────────────────┐  ┌──────────────┐
  │ CONDITION "          │   │ SET " DECELERATION │  │ SET "ORDINARY│
  └──────────────────────┘   │ CONDITION "        │  │ STATE "      │
            │                └────────────────────┘  └──────────────┘
            │                        │                     │
            ◄────────────────────────┴─────────────────────┘
            ▼
        ( RETURN )
```

## FIG. 5E

```
    ( MONITOR
      GENERATOR
      OPERATION )
          │
          ▼
  ┌──────────────────────┐
  │ READ OUTPUT VOLTAGE  │
  │ OF THE GENERATOR     │
  └──────────────────────┘
          │
          ▼
      ◇ ABOVE ◇ ──NO──────────┐
      ◇ 10V ? ◇               ▼
          │ YES        ┌──────────────┐
  ┌──────────────┐     │ SET " NO     │
  │ SET " NORMAL │     │ GENERATION   │
  │ CONDITION "  │     │ CONDITION "  │
  └──────────────┘     └──────────────┘
          │                   │
          ◄───────────────────┘
          ▼
      ( RETURN )
```

*FIG. 5G*

```
┌─────────────────────────────┐
│ MONITOR THE DISCONNECTION   │
│ OF A CHARGING LINE          │
└─────────────────────────────┘
              │
              ▼
┌─────────────────────────────┐
│ READ OUTPUT VOLTAGE         │
│ OF THE GENERATOR            │
└─────────────────────────────┘
              │
              ▼
┌─────────────────────────────┐
│ READ BATTERY                │
│ TERMINAL VOLTAGE            │
└─────────────────────────────┘
              │
              ▼
┌─────────────────────────────┐
│ OUTPUT VOLTAGE-THE          │
│ BATTERY TERMINAL            │
│ VOLTAGE                     │
└─────────────────────────────┘
              │
              ▼
           ╱ABOVE╲      NO
          ╱ 1.5V ? ╲─────────────┐
          ╲       ╱              │
           ╲     ╱               │
            │                    │
           YES                   │
            ▼                    ▼
┌─────────────────────────────┐  ┌──────────┐
│ SET " THE DISCONNECTION     │  │ SET      │
│ OF THE CHARGING LINE "      │  │ "ORDINARY│
└─────────────────────────────┘  │ STATE "  │
            │                    └──────────┘
            │                         │
            ▼◄────────────────────────┘
        ┌─────────┐
        │ RETURN  │
        └─────────┘
```

*FIG. 5F*

```
┌─────────────────────────┐
│ MONITOR EXCESSIVE       │
│ VOLTAGE OF THE          │
│ GENERATOR               │
└─────────────────────────┘
            │
            ▼
┌─────────────────────────┐
│ READ THE OUTPUT VOLTAGE │
│ OF THE GENERATOR        │
└─────────────────────────┘
            │
            ▼
        ╱ OUTPUT ╲      NO
       ╱ VOLTAGE  ╲──────────────┐
       ╲  >16V ?  ╱              │
        ╲        ╱               │
           │                     │
          YES                    │
           ▼                     ▼
┌─────────────────────┐   ┌──────────┐
│ SET " EXCESSIVE     │   │ SET      │
│ VOLTAGE CONDITION"  │   │ "ORDINARY│
└─────────────────────┘   │ STATE "  │
           │              └──────────┘
           ▼◄──────────────────┘
       ┌─────────┐
       │ RETURN  │
       └─────────┘
```

0096867

**FIG. 5H**

```
( PRODUCE AN OUTPUT FOR
  DISPLAYING FAULTS )
           │
           ▼
  ┌─────────────────────┐
  │ READ THE SETTING OF │
  │ "NO GENERATION      │
  │ CONDITION "         │
  └─────────────────────┘
           │
           ▼
        ◇ NO              NO
      GENERATION  ─────────────────┐
          ?                        │
           │ YES                   │
           ▼                       │
  ┌──────────────────────────┐     │
  │ PRODUCE AN OUTPUT FOR     │     │
  │ DISPLAYING               │     │
  │ "NO GENERATION CONDITION"│     │
  └──────────────────────────┘     │
           │◄──────────────────────┘
           ▼
  ┌──────────────────────────────┐
  │ READ THE SETTING OF          │
  │ "EXCESSIVE VOLTAGE CONDITION"│
  └──────────────────────────────┘
           │
           ▼
        ◇ EXCESSIVE        NO
         VOLTAGE ? ────────────────┐
           │ YES                   │
           ▼                       │
  ┌──────────────────────────────┐ │
  │ PRODUCE AN OUTPUT FOR         │ │
  │ DISPLAYING                   │ │
  │ "EXCESSIVE VOLTAGE CONDITION"│ │
  └──────────────────────────────┘ │
           │◄──────────────────────┘
           ▼
  ┌──────────────────────────────────┐
  │ READ THE SETTING OF "THE         │
  │ DISCONNECTION OF THE CHARGING LINE"│
  └──────────────────────────────────┘
           │
           ▼
        ◇ THE
       DISCONNECTION      NO
       OF CHARGING ───────────────┐
          LINE ?                  │
           │ YES                  │
           ▼                      │
  ┌──────────────────────┐        │
  │ PRODUCE AN OUTPUT FOR│        │
  │ DISPLAYING THE       │        │
  │ DISCONNECTION        │        │
  └──────────────────────┘        │
           │◄─────────────────────┘
           ▼
      ( RETURN )
```

0096867

*FIG. 5I*

( PRODUCE AN OUTPUT FOR CONTROLLING OPERATION )

READ THE SETTING OF "ENGINE OPERATION CONDITION"

ENGINE OPERATION CONDITION ?  NO → | YES

READ THE SETTING OF "ACCELERATION CONDITION"

NO SETTING?  NO → | YES

READ THE SETTING OF "DECELERATION CONDITION"

NO SETTING?  NO → | YES

READ THE SETTING OF "IN-SUFFICIENT CHARGE CONDITION"

NO SETTING?  NO → | YES

READ THE SETTING OF "INSUFFICIENT CHARGING CONDITION"

NO SETTING?  NO → | YES

SET CONTROL VOLT. TO 12V

SET CONTROL VOLT. TO 14.5 V

SET CONTROL VOLT. TO 15.5 V

( RETURN )